# EUROPEAN PATENT APPLICATION

(11) **EP 4 804 057 A1**
(43) Date of publication of application: **09.09.2026**
(21) Application number: 24884360.9
(22) Date of filing: 30.09.2024
(51) Int. Cl.: G06F 21/31

(54) **UNLOCKING METHOD AND APPARATUS, AND SMART WEARABLE DEVICE**

(30) Priority: 01.11.2023 CN 202311447771
(71) Applicant: Meta-Bounds Inc., Zhuhai, Guangdong 519000 (CN)
(72) Inventor: LI, Zhu, Zhuhai, Guangdong 519000 (CN)
(74) Representative: Santarelli
(86) International application number: PCT/CN2024/122883
(87) International publication number: WO 2025/092355

(57) **Abstract**

The embodiments of the present invention belong to the technical field of smart wearable devices. Provided are an unlocking method and apparatus, and a smart wearable device. The method is applied to a smart wearable device, and comprises: when a smart wearable device is in a worn state, in response to an unlocking trigger operation, entering an unlock mode and displaying an unlock interface; acquiring motion data of the smart wearable device in the unlock mode; determining an unlocking trajectory on the basis of the motion data; and on the basis of the unlocking trajectory, controlling the smart wearable device to execute a corresponding unlocking operation. The problems in the related art of a password input process being relatively complicated and lacking convenience due to the fact that it is necessary to rely on an external keyboard or a virtual keyboard to input a password when a password input mode is used to perform device decryption are solved. The speed of unlocking a smart wearable device is increased, thereby achieving the effect of quick unlocking.

## Description

The present application claims priority to Chinese Patent Application No. 2023114477710, filed with the Chinese Patent Office on November 01, 2023, and entitled "UNLOCKING METHOD AND APPARATUS, AND SMART WEARABLE DEVICE", the entire contents of which are incorporated herein by reference.

### Technical Field

The present invention relates to the technical field of smart wearable devices, and in particular, relates to an unlocking method and apparatus, and a smart wearable device.

### Background of the Invention

With the continuous advancement of technology and the continuous growth of market demand, smart wearable devices such as AR glasses and VR glasses have become one of the current research hotspots. Taking AR glasses as an example, they allow a user to see virtual images through the glasses in the real world, having broad application prospects and market potential.

In the related art, an interface displayed through AR glasses can be encrypted, so that the display interface needs to be decrypted before use of the AR glasses, which better protects the personal privacy and sensitive information of the user. However, the related art often relies on a password input mode to perform device decryption, and it is necessary to rely on an external keyboard or a virtual keyboard to input a password, thus making the password input process relatively complicated and less convenient.

### Summary of the Invention

A primary objective of embodiments of the present invention is to provide an unlocking method and apparatus, and a smart wearable device, aiming to solve the problems in the related art of a password input process being relatively complicated and lacking convenience due to the fact that it is necessary to rely on an external keyboard or a virtual keyboard to input a password when a password input mode is used to perform device decryption.

In a first aspect, an embodiment of the present invention provides an unlocking method, applied to a smart wearable device, which comprises:
when the smart wearable device is in a worn state, in response to an unlocking trigger operation, entering an unlock mode and displaying an unlock interface;
acquiring motion data of the smart wearable device in the unlock mode;
determining an unlocking trajectory on the basis of the motion data; and on the basis of the unlocking trajectory, controlling the smart wearable device to execute a corresponding unlocking operation.

In a second aspect, an embodiment of the present invention provides an unlocking apparatus, which comprises:
a trigger unlocking module configured to: when a smart wearable device is in a worn state, in response to an unlocking trigger operation, enter an unlock mode and display an unlock interface;
a data acquisition module configured to acquire motion data of the smart wearable device in the unlock mode;
a trajectory determination module configured to determine an unlocking trajectory on the basis of the motion data; and
an unlocking execution module configured to, on the basis of the unlocking trajectory, control the smart wearable device to execute a corresponding unlocking operation.

In a third aspect, an embodiment of the present invention further provides a smart wearable device. The smart wearable device comprises a processor, a memory, a computer program stored on the memory and executable by the processor, and a data bus for implementing connection and communication between the processor and the memory, wherein when the computer program is executed by the processor, the following steps in the specification of the present invention are implemented:
when the smart wearable device is in a worn state, in response to an unlocking trigger operation, entering an unlock mode and displaying an unlock interface;
acquiring motion data of the smart wearable device in the unlock mode;
determining an unlocking trajectory on the basis of the motion data; and
on the basis of the unlocking trajectory, controlling the smart wearable device to execute a corresponding unlocking operation.

The embodiments of the present invention provide an unlocking method and apparatus, and a smart wearable device. The unlocking method comprises: when the smart wearable device is in a worn state, in response to an unlocking trigger operation, entering an unlock mode and displaying an unlock interface; acquiring motion data of the smart wearable device in the unlock mode; determining an unlocking trajectory on the basis of the motion data; and on the basis of the unlocking trajectory, controlling the smart wearable device to execute a corresponding unlocking operation. By acquiring motion data corresponding to the smart wearable device and converting the motion data into the unlocking trajectory, and then controlling the smart wearable device to execute the corresponding unlocking operation on the basis of the unlocking trajectory, the smart wearable device does not need to rely on an external keyboard or a virtual keyboard when performing interface unlocking, and achieves quick unlocking simply by using its own data information, thereby further increasing the speed of unlocking. This also solves the problems in the related art of a password input process being relatively complicated and lacking convenience due to the fact that it is necessary to rely on an external keyboard or a virtual keyboard to input a password when a password input mode is used to perform device decryption.

### Brief Description of the Drawings

In order to more clearly illustrate the technical solutions in the embodiments of the present application, the drawings required to be used in the description of the embodiments will be briefly introduced below. Obviously, the drawings in the following description are some embodiments of the present application, and for those of ordinary skill in the art, other drawings can also be obtained from these drawings without any creative effort.
FIG. 1 is a schematic flowchart diagram of an unlocking method according to an embodiment of the present invention.
FIG. 2 is a schematic effect diagram of displaying a visual prompt according to an embodiment of the present invention.
FIG. 3 is a schematic diagram in which an unlock interface is a dot pattern according to an embodiment of the present invention.
FIG. 4 is a schematic effect diagram in which an unlock interface is a five-dot diagram according to an embodiment of the present invention.
FIG. 5 is a schematic flowchart diagram of sub-step S104 of the unlocking method in FIG. 1.
FIG. 6 is a schematic scenario diagram of implementing the unlocking method according to this embodiment.
FIG. 7 is a schematic modular structure diagram of an unlocking apparatus according to an embodiment of the present invention.
FIG. 8 is a schematic structural block diagram of a smart wearable device according to an embodiment of the present invention.

### Detailed Description of Embodiments

The technical solutions of the embodiments of the present invention will be described clearly and completely with reference to the attached drawings in the embodiments of the present invention. Obviously, the embodiments described herein are only a part of but not all of the embodiments of the present invention. All other embodiments that can be obtained by those of ordinary skill in the art from the embodiments of the present invention without making creative efforts shall fall within the scope of the present invention.

The flowchart diagrams shown in the drawings are merely illustrative, and do not necessarily include all contents and operations/steps, nor do they necessarily have to be executed in the described order. For example, some operations/steps may be decomposed, combined, or partially merged, so the actual execution order may change according to actual situations.

It should be understood that the terms used in the specification of the present invention herein are merely for the purpose of describing specific embodiments and are not intended to limit the present invention. As used in the specification of the present invention and the appended claims, the singular forms "a", "an", and "the" are intended to include the plural forms as well, unless the context clearly indicates otherwise.

Embodiments of the present invention provide an unlocking method and apparatus, and a smart wearable device. The unlocking method may be applied to a smart wearable device, and the smart wearable device may be an electronic device such as AR glasses or XR glasses.

Some embodiments of the present invention will be described in detail below with reference to the drawings. Provided that there is no conflict, the following embodiments and features in the embodiments can be combined with each other.

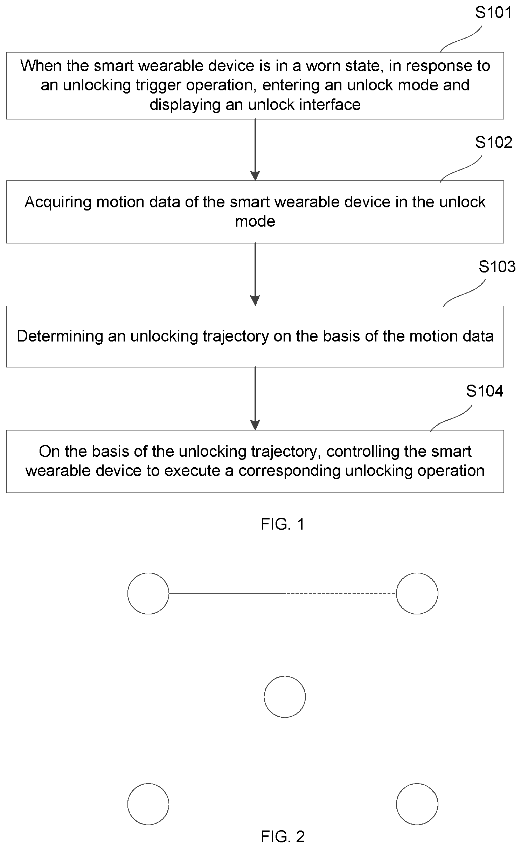

Referring to FIG. 1, there is shown a schematic flowchart diagram of an unlocking method according to an embodiment of the present invention.

As shown in FIG. 1, the unlocking method comprises steps S101 to S104.

Step S101: when the smart wearable device is in a worn state, in response to an unlocking trigger operation, entering an unlock mode and displaying an unlock interface.

Exemplarily, after a user wears the smart wearable device, the smart wearable device will be in a worn state. When the unlocking trigger operation of the smart wearable device is triggered, the smart wearable device enters the unlock mode in response to the unlocking trigger operation, and displays the unlock interface corresponding to the unlock mode.

For example, taking the case where the smart wearable device is AR glasses as an example, after the user wears the AR glasses, a virtual graphical user interface corresponding to the AR glasses is displayed. The user operates a corresponding unlock button in the virtual graphical user interface, so that the unlocking trigger operation of the AR glasses is triggered, and then the AR glasses enter the unlock mode in response to the unlocking trigger operation, and display the unlock interface corresponding to the unlock mode.

Alternatively, after the user wears the AR glasses, the unlock interface corresponding to the AR glasses is directly displayed. When the user clicks the unlock interface, the unlocking trigger operation of the AR glasses is triggered, and the AR glasses enter the unlock mode in response to the unlocking trigger operation.

Step S102: acquiring motion data of the smart wearable device in the unlock mode.

Exemplarily, after the smart wearable device enters the unlock mode, when the user wearing the smart wearable device moves, such as when the user wearing AR glasses moves his/her head, the smart wearable device will collect motion data corresponding to the smart wearable device in the unlock mode, and then the smart wearable device obtains the corresponding motion data.

For example, an inertial measurement sensor is provided in the smart wearable device, and then the inertial measurement sensor will collect the motion data of the smart wearable device when it is in the unlock mode, thereby acquiring the motion data corresponding to the smart wearable device.

In some embodiments, during the process of acquiring the motion data of the smart wearable device in the unlock mode, the method further comprises: displaying visual prompt information, wherein the visual prompt information is used to characterize a moving direction corresponding to the motion data.

Exemplarily, when the smart wearable device moves according to the unlock interface, in order to facilitate previewing the moving effect when the smart wearable device moves, visual prompt information may be displayed during the process of acquiring the motion data of the smart wearable device in the unlock mode, thereby displaying the moving direction or moving result corresponding to the motion data. In this way, it achieves the purpose of assisting unlocking, reduces the number of unlocking failures, and thus achieves the effect of quick unlocking.

For example, as shown in FIG. 2, the displayed visual prompt information is image information. When it is intended to connect two dots in the unlock interface, while the unlocking trajectory is displayed in the unlock interface according to the motion data as shown by the solid line in FIG. 2, a guide diagram corresponding to the motion data is also displayed as shown by the dashed line in FIG. 2. The dashed line is the visual prompt information, thereby achieving the purpose of prompting the user that "if continuing to move along this direction, then the unlocking trajectory shown by the dashed line in FIG. 2 can be obtained".

Optionally, the visual prompt information may adopt an image prompt, and may also adopt a text prompt, a voice prompt, etc. This is not specifically limited in the present application, and it may be selected according to actual needs.

Specifically, by displaying the visual prompt information during the process of acquiring the motion data of the smart wearable device in the unlock mode, the moving direction or moving result corresponding to the motion data can be displayed, thereby achieving the purpose of assisting the user in quick unlocking, reducing the number of unlocking failures, and obtaining the effect of quick unlocking.

Step S103: determining an unlocking trajectory on the basis of the motion data.

Exemplarily, the motion data corresponding to the smart wearable device is converted into an unlocking trajectory. That is, trajectory drawing is performed in the unlock interface according to the motion data, thereby obtaining the unlocking trajectory.

Optionally, the unlocking trajectory is displayed in real time in the unlock interface while obtaining the unlocking trajectory.

Specifically, by displaying the unlocking trajectory in real time in the unlock interface while obtaining the unlocking trajectory, user interactivity and use experience can be improved and erroneous operations can be reduced, thereby reducing the number of unlocking failures and achieving the effect of quick unlocking.

In some embodiments, when the unlock interface is a circular pattern, the operation of determining an unlocking trajectory on the basis of the motion data comprises: obtaining a dwell time corresponding to the smart wearable device during trajectory drawing on the basis of the motion data; when the dwell time is greater than a preset time, obtaining a target dwell position corresponding to the dwell time; and determining the unlocking trajectory on the basis of the target dwell position and the motion data.

Exemplarily, the unlock interface is a circular pattern, and the circular pattern includes a plurality of scales used to achieve the purpose of reminding an angle range of the movement of the smart wearable device. The dwell time corresponding to the smart wearable device during trajectory drawing is determined on the basis of the motion data. When the dwell time is greater than a preset time, a dwell position corresponding to the dwell time is used as the target dwell position, and then a start position corresponding to the smart wearable device during trajectory drawing is determined on the basis of the motion data, thereby determining the unlocking trajectory corresponding to the smart wearable device on the basis of the start position and the target dwell position.

In addition, when determining the unlocking trajectory on the basis of the start position and the target dwell position, the style of the unlocking trajectory may not be limited, as long as it is ensured that the scale corresponding to the start position and the scale corresponding to the target dwell position remain unchanged.

For example, the circular pattern is divided into unit scales over 360 degrees, and the preset time is 2 seconds. Then, the dwell time corresponding to the smart wearable device during trajectory drawing is obtained on the basis of the motion data, and when the dwell time is greater than 2 seconds, the dwell position corresponding to the dwell time is used as the target dwell position. The start position corresponding to the smart wearable device during trajectory drawing is determined on the basis of the motion data, thereby determining the unlocking trajectory corresponding to the smart wearable device on the basis of a start scale corresponding to the start position and an end scale corresponding to the target dwell position.

Specifically, when the user uses the start position and the target dwell position to determine the unlocking trajectory corresponding to the smart wearable device, it is only necessary to ensure that the scale corresponding to the start position and the scale corresponding to the target dwell position are correct. Therefore, the user gains greater flexibility when drawing the unlocking pattern, and can also achieve the unlocking effect more quickly.

In some embodiments, when the unlock interface is a dot pattern, the operation of determining an unlocking trajectory on the basis of the motion data comprises: determining connection relationships between dots in the dot pattern on the basis of the motion data; and determining the unlocking trajectory on the basis of the connection relationships.

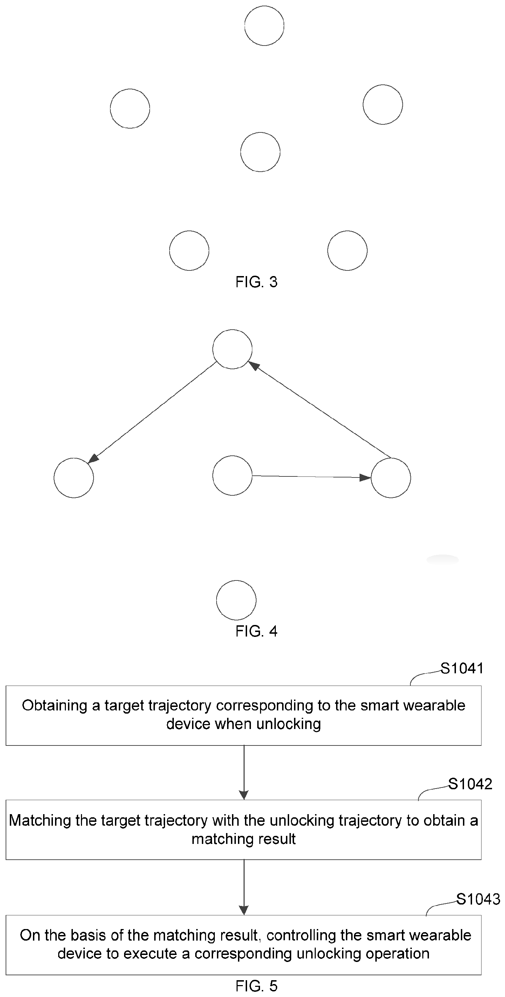

Exemplarily, as shown in FIG. 3, the unlock interface is a dot pattern, and the connection relationships between dots in the dot pattern are determined on the basis of the motion data. If the connection relationships include being connected and being unconnected, then corresponding dots are linearly connected according to the connection relationships, thereby determining the connection result as the unlocking trajectory corresponding to the smart wearable device in the unlock interface.

For example, as shown in FIG. 4, taking a five-dot diagram as an example, the dot pattern includes five dots, namely top, bottom, left, right, and center dots. If it is respectively determined that the center and right dots are in a connected relationship, the right and top dots are in a connected relationship, the top and left dots are in a connected relationship, and the relationships between the remaining dots cannot be determined as connected relationships in the motion data, then the relationships between the remaining dots are defaulted to unconnected relationships. Then, the corresponding center and right dots, right and top dots, and top and left dots in the five-dot diagram are connected with line segments, thereby obtaining the unlocking trajectory corresponding to the smart wearable device in the unlock interface.

Optionally, when the unlock interface is a dot pattern, the number of dots may be configured as a five-dot diagram, a six-dot diagram, a seven-dot diagram, a nine-dot diagram, etc. The number of dots in the unlock interface is not specifically limited in the present application, and it may be set according to actual needs.

Specifically, by configuring the unlock interface as a dot pattern, more unlocking combinations can be created, which increases the difficulty of cracking, and increases the security of the unlock interface. Moreover, the dot pattern can be customized into different shapes, bringing users a more diverse and personalized unlocking experience.

Step S104: on the basis of the unlocking trajectory, controlling the smart wearable device to execute a corresponding unlocking operation.

Exemplarily, the Euclidean distance differences between corresponding trajectory points in the unlocking trajectory and the target trajectory are squared and summed, thereby obtaining an error value between the unlocking trajectory and the target trajectory. The error value is compared with a preset error to obtain a comparison result, and an unlocking state corresponding to the unlocking operation performed on the smart wearable device is determined on the basis of the comparison result. When the error value is less than or equal to the preset error, the unlocking state corresponding to the unlocking operation performed on the smart wearable device is unlocking success; when the error value is greater than the preset error, the unlocking state corresponding to the unlocking operation performed on the mart wearable device is unlocking failure, and the unlock interface continues to be displayed.

In some embodiments, as shown in FIG. 5, the operation of on the basis of the unlocking trajectory, controlling the smart wearable device to execute a corresponding unlocking operation specifically comprises sub-steps S1041 to S1043.

Sub-step S1041: obtaining a target trajectory corresponding to the smart wearable device when unlocking.

Exemplarily, a preset target trajectory in the unlock interface of the smart wearable device is obtained from a database.

For example, based on data encoding corresponding to the unlock interface displayed by the smart wearable device, a query is performed from the database according to the data encoding, thereby obtaining the target trajectory corresponding to the smart wearable device when unlocking.

In some embodiments, before the operation of obtaining a target trajectory corresponding to the smart wearable device when unlocking, the method further comprises: in response to an unlocking trajectory setting operation, displaying an unlocking trajectory setting interface corresponding to the unlocking trajectory setting operation; obtaining movement data corresponding to the smart wearable device in the unlocking trajectory setting interface; and determining a target trajectory corresponding to the smart wearable device on the basis of the movement data, and storing the target trajectory.

Exemplarily, when the unlocking trajectory setting operation of the smart wearable device is triggered, the smart wearable device responds to the unlocking trajectory setting operation and displays the unlocking trajectory setting interface corresponding to the unlocking trajectory setting operation, and the smart wearable device moves in the unlocking trajectory setting interface, thereby obtaining movement data corresponding to the smart wearable device in the unlocking trajectory setting interface. Then, the target trajectory corresponding to the smart wearable device is determined on the basis of the movement data, and the target trajectory is stored into the database.

For example, the unlocking trajectory setting operation corresponds to a button A of the smart wearable device. When the button A is triggered, the smart wearable device responds to the unlocking trajectory setting operation and displays the unlocking trajectory setting interface corresponding to the unlocking trajectory setting operation, and then the smart wearable device moves in the unlocking trajectory setting interface, thereby obtaining the target trajectory corresponding to the smart wearable device. Then, the target trajectory and the unlocking trajectory setting interface are mapped, and the mapping result is stored into the database.

For instance, the unlocking trajectory setting interface includes Interface 1 and Interface 2. When the unlocking trajectory setting interface is displayed as Interface 1, the obtained target trajectory is the target trajectory corresponding to Interface 1, and then a corresponding data structure such as {Interface 1: target trajectory} is stored into the database. When the unlocking trajectory setting interface is displayed as Interface 2, the obtained target trajectory is the target trajectory corresponding to interface 2, and then a corresponding data structure such as {Interface 2: target trajectory} is stored into the database.

Optionally, in the unlocking trajectory setting interface, one target trajectory may be set, or a plurality of target trajectories may be set. That is, a plurality of passwords may be set in the unlocking trajectory setting interface. The number of target trajectories is not specifically limited in the present application, and it may be set according to actual needs in practical applications.

Sub-step S1042: matching the target trajectory with the unlocking trajectory to obtain a matching result.

Exemplarily, similarity calculation is performed on the target trajectory and the unlocking trajectory, thereby determining a matching result between the target trajectory and the unlocking trajectory on the basis of the similarity calculation result. When the calculated similarity result is greater than or equal to a preset similarity, the matching result is matching success. At this time, the smart wearable device can be unlocked according to the unlocking trajectory, so that the user can use the smart wearable device normally. When the similarity result is less than the preset similarity, the matching result is matching failure, and at this time, the user cannot use the smart wearable device normally.

For example, cosine similarity is used to calculate the similarity between the target trajectory and the unlocking trajectory, and the preset similarity is 0.8. When the similarity is greater than or equal to 0.8, it is determined that the matching result between the target trajectory and the unlocking trajectory is matching success. When the similarity is less than 0.8, it is determined that the matching result between the target trajectory and the unlocking trajectory is matching failure.

In some embodiments, when the unlock interface is a circular pattern, the operation of matching the target trajectory with the unlocking trajectory to obtain a matching result comprises: determining a target angle corresponding to the target trajectory and obtaining a moving angle corresponding to the unlocking trajectory; calculating an angle difference between the target angle and the moving angle; and determining the matching result on the basis of the angle difference.

Exemplarily, when the unlock interface is a circular pattern, an angle difference between the target angle corresponding to the target trajectory and the moving angle corresponding to the unlocking trajectory is used. When the angle difference is greater than a preset angle value, it is determined that the matching result between the target trajectory and the unlocking trajectory is matching failure. When the angle difference is less than or equal to the preset angle value, it is determined that the matching result between the target trajectory and the unlocking trajectory is matching success.

For example, the target angle corresponding to the target trajectory is 30 degrees, and the moving angle corresponding to the unlocking trajectory is 32 degrees. Then, angle difference calculation is performed on the target angle and the moving angle to obtain an error of 2 degrees between the target angle and the moving angle. When the preset angle value is set to 1 degree, the matching result between the target trajectory and the unlocking trajectory is matching failure. When the preset angle value is set to 2 degrees, the matching result between the target trajectory and the unlocking trajectory is matching success.

Specifically, when determining the matching result on the basis of the angle difference, it is only necessary to use the angle difference between the target angle corresponding to the target trajectory and the moving angle corresponding to the unlocking trajectory, without calculating the error between the trajectories, which simplifies the method of matching calculation, improves the efficiency of calculating the matching result, and enables faster unlocking.

In some embodiments, when the unlock interface is a dot pattern, the operation of matching the target trajectory with the unlocking trajectory to obtain a matching result comprises: determining a target angle and a target direction corresponding to the target trajectory; determining a moving angle and a moving direction corresponding to the unlocking trajectory on the basis of the motion data; calculating a first similarity between the target angle and the moving angle, and a second similarity between the target direction and the moving direction; and determining a matching result corresponding to the target trajectory and the unlocking trajectory on the basis of the first similarity and the second similarity.

Exemplarily, when the unlock interface is a dot pattern, the target angle and the target direction corresponding to the connection relationships between dots in the target trajectory are obtained, and the moving angle and the moving direction corresponding to the unlocking trajectory determined on the basis of the motion data are obtained. Then, error calculation is performed on the target angle and the moving angle to obtain the first similarity, and similarity calculation is performed on the target direction and the moving direction to obtain the second similarity. Then, weighted summation is performed on the first similarity and the second similarity to obtain a fusion similarity. When the fusion similarity is greater than or equal to a preset similarity, the matching result corresponding to the target trajectory and the unlocking trajectory is matching success. When the fusion similarity is less than the preset similarity, the matching result corresponding to the target trajectory and the unlocking trajectory is matching failure.

Optionally, in the present application, the way in which weights in the weighted summation are obtained may be set by oneself or set according to historical experience. This is not specifically limited in the present application, and it may be set according to needs.

For example, the unlock interface is a five-dot diagram, and the target trajectory is center-right, right-top, and top-left as shown in FIG. 4. Taking the right direction of the straight line where the left, center, and right dots are located as the x-axis, and taking the up direction of the straight line where the top, center, and bottom dots are located as the x-axis, the target angle corresponding to center-right is 0 degrees, and the target direction is from the center dot to the right dot; the target angle corresponding to right-top is 135 degrees, and the target direction is from the right dot to the top dot; the target angle corresponding to top-left is 45 degrees, and the target direction is from the top dot to the left dot. The moving angle and moving direction corresponding to the unlocking trajectory are determined on the basis of the motion data. For example, if the unlocking trajectory is center-right, right-top, and top-center, then the moving angle corresponding to center-right is 0 degrees, and the moving direction is from the center dot to the right dot; the moving angle corresponding to right-top is 135 degrees, and the moving direction is from the right dot to the top dot; the moving angle corresponding to top-center is 90 degrees, and the moving direction is from the top dot to the center dot. Therefore, similarity calculation is respectively performed on center-right in the target trajectory and center-right in the unlocking trajectory, right-top in the target trajectory and center-top in the unlocking trajectory, and top-left in the target trajectory and center-right in the unlocking trajectory.

It is obtained that the angle similarity between center-right in the target trajectory and center-right in the unlocking trajectory is 1, the direction similarity is 1; the angle similarity between right-top in the target trajectory and center-top in the unlocking trajectory is 1, and the direction similarity is 1; but the angle similarity between top-left in the target trajectory and center-right in the unlocking trajectory is 0, and the direction similarity is 0. Then, after fusing the above similarity results, the similarity is calculated to be 4/6 = 67%. When the preset similarity is set to 90%, it is determined that the matching result corresponding to the target trajectory and the unlocking trajectory is matching failure.

Specifically, when unlocking the unlock interface which is a dot pattern, drawing the dot pattern is quicker and more convenient, and the matching result between the target trajectory and the unlocking trajectory is considered and calculated from multiple aspects, which improves the accuracy of unlocking.

Sub-step S1043: on the basis of the matching result, controlling the smart wearable device to execute a corresponding unlocking operation.

Exemplarily, when the matching result is matching success, the unlock interface of the smart wearable device is successfully unlocked, and the unlocking state obtained after the smart wearable device executes the corresponding unlocking operation is unlocking success. When the matching result is matching failure, unlocking the unlock interface of the smart wearable device fails, the unlocking state obtained after the smart wearable device executes the corresponding unlocking operation is unlocking failure, and the unlock interface corresponding to the smart wearable device will continue to be displayed.

In some embodiments, when the unlocking state obtained after executing the unlocking operation on the smart wearable device on the basis of the unlocking trajectory is unlocking failure, the method further comprises: acquiring iris information of a target object wearing the smart wearable device; matching the iris information with preset iris information to obtain an iris matching result; and continuing to execute an unlocking operation on the smart wearable device on the basis of the iris matching result.
Exemplarily, when the smart wearable device cannot be controlled to execute the unlocking operation by the unlocking trajectory, that is, the unlocking trajectory is input incorrectly and is inconsistent with the target trajectory, the smart wearable device cannot be unlocked.

For example, when the similarity between the unlocking trajectory and the target trajectory is less than a first threshold, it is directly determined that unlocking the smart wearable device fails. When the similarity between the unlocking trajectory and the target trajectory is greater than the first threshold and less than a second threshold, it is determined that unlocking the smart wearable device fails, but at this time, the iris information of the target object wearing the smart wearable device can be acquired, and then the iris matching result is determined on the basis of the iris information, thereby continuing to execute the unlocking operation on the smart wearable device. When the similarity between the unlocking trajectory and the target trajectory is greater than the second threshold, the unlocking operation is executed on the smart wearable device, and it is determined that the smart wearable device is successfully unlocked.

Exemplarily, the target object is a user wearing the smart wearable device, and the iris information of the user is acquired; then similarity calculation is performed on the iris information and the preset iris information to obtain an iris matching result; and when the iris matching result is greater than or equal to a preset similarity value, the unlocking operation continues to be executed on the smart wearable device.

For example, the preset iris information includes iris information 1 of user A, and the preset similarity value is 90%. Then when the target object is the user A and the acquired iris information is iris information 2, similarity calculation is performed on iris information 1 and iris information 2. If the obtained iris matching result is 98%, the unlocking operation can continue to be executed on the smart wearable device. If the target object is user B and the acquired iris information is iris information 3, then similarity calculation is performed on iris information 1 and iris information 3. If the obtained iris matching result is 20%, then the unlocking operation cannot continue to be executed on the smart wearable device, or the unlocking operation continues to be executed on the smart wearable device, but the unlocking fails.

Specifically, by adding an iris unlocking method between the first threshold and the second threshold, the risk of unlocking failure can be reduced and user experience can be enhanced.

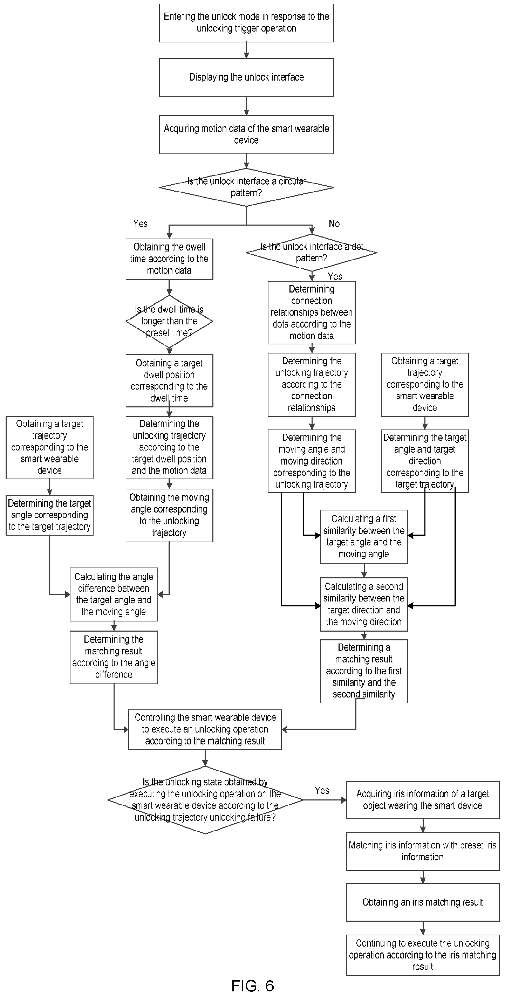

Referring to FIG. 6, there is shown a schematic scenario diagram of implementing the unlocking method according to this embodiment. As shown in FIG. 6, when the smart wearable device is in a worn state, it enters the unlock mode and displays the unlock interface in response to an unlocking trigger operation, and motion data of the smart wearable device in the unlock mode is acquired; when the unlock interface is a circular pattern, a dwell time corresponding to the smart wearable device during trajectory drawing is obtained on the basis of the motion data; when the dwell time is greater than a preset time, a target dwell position corresponding to the dwell time is obtained, and then an unlocking trajectory is determined on the basis of the target dwell position and the motion data. When the unlock interface is a dot pattern, connection relationships between dots in the dot pattern is determined on the basis of the motion data, and then the unlocking trajectory is determined on the basis of the connection relationships. A target trajectory corresponding to the smart wearable device when unlocking is obtained. When the unlock interface is a circular pattern, a target angle corresponding to the target trajectory is determined and a moving angle corresponding to the unlocking trajectory is obtained; an angle difference between the target angle and the moving angle is calculated; and a matching result is determined on the basis of the angle difference. When the unlock interface is a dot pattern, a target angle and a target direction corresponding to the target trajectory are determined; a moving angle and a moving direction corresponding to the unlocking trajectory are determined on the basis of the motion data; a first similarity between the target angle and the moving angle and a second similarity between the target direction and the moving direction are calculated; and a matching result corresponding to the target trajectory and the unlocking trajectory is determined on the basis of the first similarity and the second similarity. Thereby, the smart wearable device is controlled to execute a corresponding unlocking operation on the basis of the matching result. When the unlocking state obtained after executing the corresponding unlocking operation on the smart wearable device on the basis of the unlocking trajectory is unlocking failure, iris information of a target object wearing the smart wearable device is acquired; the iris information is matched with preset iris information to obtain an iris matching result; thereby continuing to execute the unlocking operation on the smart wearable device on the basis of the iris matching result. This further solves the problems in the related art of a password input process being relatively complicated and lacking convenience due to the fact that it is necessary to rely on an external keyboard or a virtual keyboard to input a password when a password input mode is used to perform device decryption. The convenience and flexibility of performing decryption on the smart wearable device are improved.

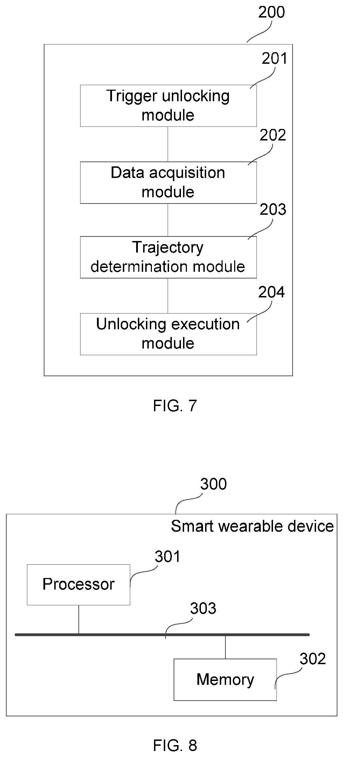

Referring to FIG. 7, an unlocking apparatus 200 provided according to an embodiment of the present invention comprises a trigger unlocking module 201, a data acquisition module 202, a trajectory determination module 203, and an unlocking execution module 204. The trigger unlocking module 201 is configured to: when the smart wearable device is in a worn state, in response to an unlocking trigger operation, enter an unlock mode and display an unlock interface; the data acquisition module 202 is configured to acquire motion data of the smart wearable device in the unlock mode; the trajectory determination module 203 is configured to determine an unlocking trajectory on the basis of the motion data; and the unlocking execution module 204 is configured to, on the basis of the unlocking trajectory, control the smart wearable device to execute a corresponding unlocking operation.

In some embodiments, during the process of acquiring the motion data of the smart wearable device in the unlock mode, the data acquisition module 202 further executes the operation of: displaying visual prompt information, wherein the visual prompt information is used to characterize a moving direction corresponding to the motion data.

In some embodiments, when the unlock interface is a circular pattern, during the process of determining the unlocking trajectory on the basis of the motion data, the trajectory determination module 203 executes the operations of:
obtaining a dwell time corresponding to the smart wearable device during trajectory drawing on the basis of the motion data;
when the dwell time is greater than a preset time, obtaining a target dwell position corresponding to the dwell time; and
determining the unlocking trajectory on the basis of the target dwell position and the motion data.

In some embodiments, when the unlock interface is a dot pattern, during the process of determining the unlocking trajectory on the basis of the motion data, the trajectory determination module 203 executes the operations of:
determining connection relationships between dots in the dot pattern on the basis of the motion data; and
determining the unlocking trajectory on the basis of the connection relationships.

In some embodiments, during the process of controlling the smart wearable device to execute the corresponding unlocking operation on the basis of the unlocking trajectory, the unlocking execution module 204 executes the operations of:
obtaining a target trajectory corresponding to the smart wearable device when unlocking;
matching the target trajectory with the unlocking trajectory to obtain a matching result; and
controlling the smart wearable device to execute a corresponding unlocking operation on the basis of the matching result.

In some embodiments, when the unlock interface is a circular pattern, during the process of matching the target unlocking trajectory with the unlocking trajectory to obtain a matching result, the unlocking execution module 204 executes the operations of:
determining a target angle corresponding to the target unlocking trajectory and obtaining a moving angle corresponding to the unlocking trajectory;
calculating an angle difference between the target angle and the moving angle; and
determining the matching result on the basis of the angle difference.

In some embodiments, when the unlock interface is a dot pattern, during the process of matching the target unlocking trajectory with the unlocking trajectory to obtain a matching result, the unlocking execution module 204 executes the operations of:
determining a target angle and a target direction corresponding to the target unlocking trajectory;
determining a moving angle and a moving direction corresponding to the unlocking trajectory on the basis of the motion data;
calculating a first similarity between the target angle and the moving angle, and a second similarity between the target direction and the moving direction; and
determining a matching result corresponding to the target unlocking trajectory and the unlocking trajectory on the basis of the first similarity and the second similarity.

In some embodiments, when the unlocking state obtained after executing the unlocking operation on the smart wearable device on the basis of the unlocking trajectory is unlocking failure, the unlocking execution module 204 further executes the operations of:
acquiring iris information of a target object wearing the smart wearable device;
matching the iris information with preset iris information to obtain an iris matching result; and
continuing to execute an unlocking operation on the smart wearable device on the basis of the iris matching result.

In some embodiments, the unlocking apparatus 200 can also be applied to a smart wearable device.

Referring to FIG. 8, there is shown a schematic structural block diagram of a smart wearable device according to an embodiment of the present invention.

As shown in FIG. 8, the smart wearable device 300 comprises a processor 301 and a memory 302, the processor 301 and the memory 302 are connected through a bus 303, and the bus is, for example, an Inter-integrated Circuit (I2C) bus.

Specifically, the processor 301 is configured to provide computing and control capabilities to support the operation of the entire smart wearable device. The processor 301 may be a Central Processing Unit (CPU), and the processor 301 may also be other general-purpose processors, a Digital Signal Processor (DSP), an Application Specific Integrated Circuit (ASIC), a Field-Programmable Gate Array (FPGA) or other programmable logic devices, discrete gates or transistor logic devices, discrete hardware components, etc. The general-purpose processor may be a microprocessor or the processor may also be any conventional processor, etc.

Specifically, the memory 302 may be a Flash chip, a Read-Only Memory (ROM), a magnetic disk, an optical disk, a USB flash drive, or a mobile hard disk, etc.

As shall be appreciated by those skilled in the art, the structure shown in FIG. 8 is merely a block diagram of a partial structure related to the solution of the embodiment of the present invention, and does not constitute a limitation on the smart wearable device to which the solution of the embodiment of the present invention is applied. A specific server may include more or fewer components than those shown in the figure, or combine some components, or have a different component arrangement.

The processor is configured to run a computer program stored in the memory, and when executing the computer program, implement any one of the unlocking methods provided according to the embodiments of the present invention.

In an embodiment, the processor is configured to run a computer program stored in the memory, and when executing the computer program, implement the following steps:
when the smart wearable device is in a worn state, in response to an unlocking trigger operation, entering an unlock mode and displaying an unlock interface;
acquiring motion data of the smart wearable device in the unlock mode;
determining an unlocking trajectory on the basis of the motion data; and
on the basis of the unlocking trajectory, controlling the smart wearable device to execute a corresponding unlocking operation.

In some embodiments, during the process of acquiring the motion data of the smart wearable device in the unlock mode, the processor 301 further executes the operation of: displaying visual prompt information, wherein the visual prompt information is used to characterize a moving direction corresponding to the motion data.

In some embodiments, when the unlock interface is a circular pattern, during the process of determining the unlocking trajectory on the basis of the motion data, the processor 301 executes the operations of:
obtaining a dwell time corresponding to the smart wearable device during trajectory drawing on the basis of the motion data;
when the dwell time is greater than a preset time, obtaining a target dwell position corresponding to the dwell time; and
determining the unlocking trajectory on the basis of the target dwell position and the motion data.

In some embodiments, when the unlock interface is a dot pattern, during the process of determining the unlocking trajectory on the basis of the motion data, the processor 301 executes the operations of:
determining connection relationships between dots in the dot pattern on the basis of the motion data; and
determining the unlocking trajectory on the basis of the connection relationships.

In some embodiments, during the process of controlling the smart wearable device to execute the corresponding unlocking operation on the basis of the unlocking trajectory, the processor 301 executes the operations of:
obtaining a target trajectory corresponding to the smart wearable device when unlocking;
matching the target trajectory with the unlocking trajectory to obtain a matching result; and
controlling the smart wearable device to execute a corresponding unlocking operation on the basis of the matching result.

In some embodiments, when the unlock interface is a circular pattern, during the process of matching the target unlocking trajectory with the unlocking trajectory to obtain a matching result, the processor 301 executes the operations of:
determining a target angle corresponding to the target unlocking trajectory and obtaining a moving angle corresponding to the unlocking trajectory;
calculating an angle difference between the target angle and the moving angle; and
determining the matching result on the basis of the angle difference.

In some embodiments, when the unlock interface is a dot pattern, during the process of matching the target unlocking trajectory with the unlocking trajectory to obtain a matching result, the processor 301 executes the operations of:
determining a target angle and a target direction corresponding to the target unlocking trajectory;
determining a moving angle and a moving direction corresponding to the unlocking trajectory on the basis of the motion data;
calculating a first similarity between the target angle and the moving angle, and a second similarity between the target direction and the moving direction; and
determining a matching result corresponding to the target unlocking trajectory and the unlocking trajectory on the basis of the first similarity and the second similarity.

In some embodiments, before implementing the operation of obtaining a target trajectory corresponding to the smart wearable device when unlocking, the processor 301 is further configured to implement:
in response to an unlocking trajectory setting operation, displaying an unlocking trajectory setting interface corresponding to the unlocking trajectory setting operation;
obtaining movement data corresponding to the smart wearable device in the unlocking trajectory setting interface; and
determining a target trajectory corresponding to the smart wearable device on the basis of the movement data, and storing the target trajectory.

In some embodiments, when the unlocking state obtained after executing the unlocking operation on the smart wearable device on the basis of the unlocking trajectory is unlocking failure, the processor 301 further executes the operations of:
acquiring iris information of a target object wearing the smart wearable device;
matching the iris information with preset iris information to obtain an iris matching result; and
continuing to execute an unlocking operation on the smart wearable device on the basis of the iris matching result.

It should be noted that as shall be clearly appreciated by those skilled in the art, for convenience and brevity of description, reference may be made to the corresponding process in the foregoing unlocking method embodiments for the specific working process of the smart wearable device described above, and this will not be further described herein.

An embodiment of the present invention further provides a storage medium for computer-readable storage. The storage medium stores one or more programs, and the one or more programs can be executed by one or more processors to implement the following steps as provided in the specification of the embodiments of the present invention:
when the smart wearable device is in a worn state, in response to an unlocking trigger operation, entering an unlock mode and displaying an unlock interface;
acquiring motion data of the smart wearable device in the unlock mode;
determining an unlocking trajectory on the basis of the motion data; and
on the basis of the unlocking trajectory, controlling the smart wearable device to execute a corresponding unlocking operation.

The storage medium may be an internal storage unit of the smart wearable device described in the foregoing embodiments, such as a hard disk or a memory of the smart wearable device. The storage medium may also be an external storage device of the smart wearable device, such as a plug-in hard disk, a Smart Media Card (SMC), a Secure Digital (SD) card, a Flash Card, etc., equipped on the smart wearable device.

As shall be appreciated by those of ordinary skill in the art, all or some of the steps in the methods, as well as the functional modules/units in the systems and apparatuses disclosed above may be implemented as software, firmware, hardware, and appropriate combinations thereof. In a hardware embodiment, the division between functional modules/units mentioned in the above description does not necessarily correspond to the division of physical components; for example, one physical component may have a plurality of functions, or one function or step may be executed cooperatively by several physical components. Some physical components or all physical components may be implemented as software executed by a processor, such as a central processing unit, a digital signal processor, or a microprocessor, or implemented as hardware, or implemented as an integrated circuit, such as an application-specific integrated circuit. Such software can be distributed on computer-readable media, which can include computer storage media (or non-transitory media) and communication media (or transitory media). As is well known to those of ordinary skill in the art, the term computer storage media includes volatile and non-volatile, removable and non-removable media implemented in any method or technology for storing information (such as computer-readable instructions, data structures, program modules, or other data). Computer storage media include but are not limited to RAM, ROM, EEPROM, flash memory or other memory technologies, CD-ROM, Digital Versatile Disk (DVD) or other optical disk storage, magnetic cassettes, magnetic tapes, magnetic disk storage or other magnetic storage devices, or any other media that can be used to store desired information and can be accessed by a computer. In addition, it is well known to those of ordinary skill in the art that communication media typically include computer-readable instructions, data structures, program modules, or other data in a modulated data signal such as a carrier wave or other transport mechanism, and may include any information delivery media.

It should be understood that the term "and/or" used in the specification of the present invention and the appended claims refers to any combination and all possible combinations of one or more of the associated listed items, and includes these combinations. It should be noted that herein, the terms "include", "comprise", or any other variants thereof are intended to cover a non-exclusive inclusion, such that a process, method, article, or system that includes a series of elements not only includes those elements, but also includes other elements not explicitly listed, or also includes elements inherent to such a process, method, article, or system. Without more restrictions, an element defined by the phrase "including a..." does not exclude the presence of additional identical elements in the process, method, article, or system that includes the element.

The sequence numbers of the foregoing embodiments of the present invention are merely for description, and do not represent the superiority or inferiority of the embodiments. The above descriptions are merely specific embodiments of the present invention, but the protection scope of the present invention is not limited thereto. Any person skilled in the art can easily think of various equivalent modifications or replacements within the technical scope disclosed in the present invention, and these modifications or replacements shall fall within the protection scope of the present invention. Therefore, the protection scope of the present invention shall be governed by the protection scope of the claims.

## Claims

1. An unlocking method, applied to a smart wearable device, the method comprising:
when the smart wearable device is in a worn state, in response to an unlocking trigger operation, entering an unlock mode and displaying an unlock interface;
acquiring motion data of the smart wearable device in the unlock mode;
determining an unlocking trajectory on the basis of the motion data; and
on the basis of the unlocking trajectory, controlling the smart wearable device to execute a corresponding unlocking operation.

2. The method according to Claim 1, wherein during the process of acquiring the motion data of the smart wearable device in the unlock mode, the method further comprises: displaying visual prompt information, wherein the visual prompt information is used to characterize a moving direction corresponding to the motion data.

3. The method according to Claim 1, wherein when the unlock interface is a circular pattern, the operation of determining an unlocking trajectory on the basis of the motion data comprises:
obtaining a dwell time corresponding to the smart wearable device during trajectory drawing on the basis of the motion data;
when the dwell time is greater than a preset time, obtaining a target dwell position corresponding to the dwell time; and
determining the unlocking trajectory on the basis of the target dwell position and the motion data.

4. The method according to Claim 1, wherein when the unlock interface is a dot pattern, the operation of determining an unlocking trajectory on the basis of the motion data comprises:
determining connection relationships between dots in the dot pattern on the basis of the motion data; and
determining the unlocking trajectory on the basis of the connection relationships.

5. The method according to Claim 1, wherein the operation of on the basis of the unlocking trajectory, controlling the smart wearable device to execute a corresponding unlocking operation comprises:
obtaining a target trajectory corresponding to the smart wearable device when unlocking;
matching the target trajectory with the unlocking trajectory to obtain a matching result; and
controlling the smart wearable device to execute a corresponding unlocking operation on the basis of the matching result.

6. The method according to Claim 5, wherein when the unlock interface is a circular pattern, the operation of matching the target trajectory with the unlocking trajectory to obtain a matching result comprises:
determining a target angle corresponding to the target trajectory and obtaining a moving angle corresponding to the unlocking trajectory;
calculating an angle difference between the target angle and the moving angle; and
determining the matching result on the basis of the angle difference.

7. The method according to Claim 5, wherein when the unlock interface is a dot pattern, the operation of matching the target trajectory with the unlocking trajectory to obtain a matching result comprises:
determining a target angle and a target direction corresponding to the target trajectory;
determining a moving angle and a moving direction corresponding to the unlocking trajectory on the basis of the motion data;
calculating a first similarity between the target angle and the moving angle, and a second similarity between the target direction and the moving direction; and
determining a matching result corresponding to the target trajectory and the unlocking trajectory on the basis of the first similarity and the second similarity.

8. The method according to Claim 7, wherein the operation of determining a matching result corresponding to the target trajectory and the unlocking trajectory on the basis of the first similarity and the second similarity comprises:
performing weighted summation on the first similarity and the second similarity to obtain a fusion similarity;
when the fusion similarity is greater than or equal to a preset similarity, the matching result corresponding to the target trajectory and the unlocking trajectory is matching success; and
when the fusion similarity is less than the preset similarity, the matching result corresponding to the target trajectory and the unlocking trajectory is matching failure.

9. The method according to any of Claims 1 to 8, wherein before the operation of obtaining a target trajectory corresponding to the smart wearable device when unlocking, the method further comprises:
in response to an unlocking trajectory setting operation, displaying an unlocking trajectory setting interface corresponding to the unlocking trajectory setting operation;
obtaining movement data corresponding to the smart wearable device in the unlocking trajectory setting interface; and
determining a target trajectory corresponding to the smart wearable device on the basis of the movement data, and storing the target trajectory.

10. The method according to any of Claims 1 to 8, wherein when an unlocking state obtained after executing the unlocking operation on the smart wearable device on the basis of the unlocking trajectory is unlocking failure, the method further comprises:
acquiring iris information of a target object wearing the smart wearable device;
matching the iris information with preset iris information to obtain an iris matching result; and
continuing to execute an unlocking operation on the smart wearable device on the basis of the iris matching result.

11. An unlocking apparatus, comprising:
a trigger unlocking module configured to: when a smart wearable device is in a worn state,
in response to an unlocking trigger operation, enter an unlock mode and display an unlock interface;
a data acquisition module configured to acquire motion data of the smart wearable device in the unlock mode;
a trajectory determination module configured to determine an unlocking trajectory on the basis of the motion data; and
an unlocking execution module configured to, on the basis of the unlocking trajectory, control the smart wearable device to execute a corresponding unlocking operation.

12. A smart wearable device, comprising a processor and a memory;
the memory being configured to store a computer program; and
the processor being configured to execute the computer program and implement the following steps when executing the computer program:
when the smart wearable device is in a worn state, in response to an unlocking trigger operation, entering an unlock mode and displaying an unlock interface;
acquiring motion data of the smart wearable device in the unlock mode;
determining an unlocking trajectory on the basis of the motion data; and
on the basis of the unlocking trajectory, controlling the smart wearable device to execute a corresponding unlocking operation.

13. The smart wearable device according to Claim 12, wherein during the process of acquiring the motion data of the smart wearable device in the unlock mode, the processor is further configured to implement: displaying visual prompt information, wherein the visual prompt information is used to characterize a moving direction corresponding to the motion data.

14. The smart wearable device according to Claim 12, wherein when implementing the operation of determining an unlocking trajectory on the basis of the motion data when the unlock interface is a circular pattern, the processor is configured to implement:
obtaining a dwell time corresponding to the smart wearable device during trajectory drawing on the basis of the motion data;
when the dwell time is greater than a preset time, obtaining a target dwell position corresponding to the dwell time; and
determining the unlocking trajectory on the basis of the target dwell position and the motion data.

15. The smart wearable device according to Claim 12, wherein when implementing the operation of determining an unlocking trajectory on the basis of the motion data when the unlock interface is a dot pattern, the processor is configured to implement:
determining connection relationships between dots in the dot pattern on the basis of the motion data; and
determining the unlocking trajectory on the basis of the connection relationships.

16. The smart wearable device according to Claim 12, wherein when implementing the operation of on the basis of the unlocking trajectory, controlling the smart wearable device to execute a corresponding unlocking operation, the processor is configured to implement:
obtaining a target trajectory corresponding to the smart wearable device when unlocking;
matching the target trajectory with the unlocking trajectory to obtain a matching result; and
controlling the smart wearable device to execute a corresponding unlocking operation on the basis of the matching result.

17. The smart wearable device according to Claim 16, wherein when implementing the operation of matching the target trajectory with the unlocking trajectory to obtain a matching result when the unlock interface is a circular pattern, the processor is configured to implement:
determining a target angle corresponding to the target trajectory and obtaining a moving angle corresponding to the unlocking trajectory;
calculating an angle difference between the target angle and the moving angle; and
determining the matching result on the basis of the angle difference.

18. The smart wearable device according to Claim 16, wherein when implementing the operation of matching the target trajectory with the unlocking trajectory to obtain a matching result when the unlock interface is a dot pattern, the processor is configured to implement:
determining a target angle and a target direction corresponding to the target trajectory;
determining a moving angle and a moving direction corresponding to the unlocking trajectory on the basis of the motion data;
calculating a first similarity between the target angle and the moving angle, and a second similarity between the target direction and the moving direction; and
determining a matching result corresponding to the target trajectory and the unlocking trajectory on the basis of the first similarity and the second similarity.

19. The smart wearable device according to any of Claims 12 to 18, wherein before implementing the operation of obtaining a target trajectory corresponding to the smart wearable device when unlocking, the processor is further configured to implement:
in response to an unlocking trajectory setting operation, displaying an unlocking trajectory setting interface corresponding to the unlocking trajectory setting operation;
obtaining movement data corresponding to the smart wearable device in the unlocking trajectory setting interface; and
determining a target trajectory corresponding to the smart wearable device on the basis of the movement data, and storing the target trajectory.

20. The smart wearable device according to any of Claims 12 to 18, wherein when an unlocking state obtained after executing the unlocking operation on the smart wearable device on the basis of the unlocking trajectory is unlocking failure, the processor is further configured to implement:
acquiring iris information of a target object wearing the smart wearable device;
matching the iris information with preset iris information to obtain an iris matching result; and
continuing to execute an unlocking operation on the smart wearable device on the basis of the iris matching result.
